# EUROPÄISCHE PATENTSCHRIFT

(11) **EP 3 977 683 B1**
(45) Veröffentlichungstag und Bekanntmachung des Hinweises auf die Patenterteilung: **24.04.2024**
(21) Anmeldenummer: 20728744.2
(22) Anmeldetag: 27.05.2020
(51) Int. Cl.: H04L 12/40, H04L 12/413

(54) **EINRICHTUNG FÜR EINE TEILNEHMERSTATION EINES SERIELLEN BUSSYSTEMS UND VERFAHREN ZUR KOMMUNIKATION IN EINEM SERIELLEN BUSSYSTEM**
DEVICE FOR A SUBSCRIBER STATION OF A SERIAL BUS SYSTEM AND METHOD FOR COMMUNICATION IN A SERIAL BUS SYSTEM
DISPOSITIF POUR UNE STATION D'ABONNÉ D'UN SYSTÈME DE BUS SÉRIE ET PROCÉDÉ DE COMMUNICATION DANS UN SYSTÈME DE BUS SÉRIE

(30) Priorität: 03.06.2019 DE 102019208059
(43) Veröffentlichungstag der Anmeldung: 06.04.2022
(73) Patentinhaber: Robert Bosch GmbH, 70442 Stuttgart (DE)
(72) Erfinder: HARTWICH, Florian, 72762 Reutlingen (DE); WALKER, Steffen, 72770 Reutlingen (DE); MUTTER, Arthur, 73765 Neuhausen (DE)
(86) Internationale Anmeldenummer: PCT/EP2020/064670
(87) Internationale Veröffentlichungsnummer: WO 2020/244985

(56) Entgegenhaltungen:
- EP-A2- 0 940 950
- DE-A1-102015 209 196

## Beschreibung

### Technisches Gebiet

Die vorliegende Erfindung betrifft eine Einrichtung für eine Teilnehmerstation eines seriellen Bussystems und ein Verfahren zur Kommunikation in einem seriellen Bussystem, das mit hoher Datenrate und großer Fehlerrobustheit arbeitet.

### Stand der Technik

Bussysteme werden heutzutage häufig bei der Kommunikation zwischen Sensoren und Steuergeräten eingesetzt. Insbesondere in Fahrzeugen, wird häufig ein Bussystem eingesetzt, in welchem Daten als Nachrichten im Standard ISO11898-1:2015 als CAN Protokoll-Spezifikation mit CAN FD übertragen werden. Die Nachrichten werden zwischen den Busteilnehmern des Bussystems, wie Sensor, Steuergerät, Geber, usw., übertragen.

Oft ist gewünscht, dass technische Anlagen immer mehr Funktionen bieten. Dies gilt insbesondere für Fahrzeuge. Die zunehmende Anzahl der Funktionen bedingt, dass auch der Datenverkehr im Bussystem zunimmt. Noch dazu ist es oft gefordert, dass die Daten schneller vom Sender zum Empfänger zu übertragen sind als bisher. Folge davon ist, dass die geforderte Bandbreite des Bussystems weiter steigen wird.

Um Daten mit höherer Bitrate übertragen zu können als bei CAN, wurde im CAN FD Nachrichten-Format eine Option zur Umschaltung auf eine höhere Bitrate innerhalb einer Nachricht geschaffen. Bei solchen Techniken wird die maximal mögliche Datenrate durch Einsatz einer höheren Taktung im Bereich der Datenfelder über einen Wert von 1 MBit/s hinaus gesteigert. Solche Nachrichten werden nachfolgend auch als CAN FD-Rahmen oder CAN FD-Nachrichten bezeichnet. Bei CAN FD ist die Nutzdatenlänge von 8 auf bis zu 64 Bytes erweitert und sind die Datenübertragungsraten deutlich höher als bei CAN.

Vorteilhaft an einem CAN oder CAN FD basierten Kommunikationsnetzwerk ist beispielsweise seine Robustheit gegen Fehler. Außerdem kann das Kommunikationsnetzwerk schnell auf sich ändernde Betriebszustände reagieren. Dies ist insbesondere in einem Fahrzeug wichtig, um im Bedarfsfall die Funktion von Sicherheitssystemen schnell umsetzen zu können.

Jedoch hat ein solches Netzwerk doch eine deutlich geringere Schnelligkeit im Vergleich zu einer Datenübertragung bei zum Beispiel 100 Base-T1 Ethernet. Außerdem ist die bisher mit CAN FD erreichte Nutzdatenlänge von bis zu 64 Bytes für einige Anwendungen zu gering.

DE 10 2015 209196 A1 offenbart eine Einrichtung für ein serielles Bussystem, bei welchem ein Auswertemodul die Differenz aus gezählten Flanken in einem Sendesignal und gezählten Flanken in einem Empfangssignal mit Information vergleicht, die über die Anzahl gezählter Stuff-Bits in dem gesendeten Rahmen mit übertragen wird. Der Empfänger des Rahmens kann dann entscheiden, ob ein empfangener Rahmen zu verwerfen ist oder nicht.

### Offenbarung der Erfindung

Daher ist es Aufgabe der vorliegenden Erfindung, eine Einrichtung für eine Teilnehmerstation eines seriellen Bussystems und ein Verfahren zur Kommunikation in einem seriellen Bussystem bereitzustellen, welche die zuvor genannten Probleme lösen. Insbesondere sollen eine Einrichtung für eine Teilnehmerstation eines seriellen Bussystems und ein Verfahren zur Kommunikation in einem seriellen Bussystem bereitgestellt werden, bei welchen bei großer Flexibilität im Betrieb einer technischen Anlage, in welcher das Bussystem zur Kommunikation eingesetzt wird, und bei großer Fehlerrobustheit der Kommunikation eine hohe Datenrate und eine Steigerung der Menge der Nutzdaten pro Rahmen realisiert werden kann.

Die Aufgabe wird durch eine Einrichtung für eine Teilnehmerstation eines seriellen Bussystems mit den Merkmalen von Anspruch 1 gelöst. Die Einrichtung hat ein Sendesignalanalysemodul zum Zählen von Flanken eines Sendesignals, das auf einen Bus des Bussystems zu senden ist, um eine Nachricht, zwischen Teilnehmerstationen des Bussystems auszutauschen, ein Empfangssignalanalysemodul zum Zählen von Flanken eines Empfangssignals, das aus einem auf dem Bus aufgrund des Sendesignals übertragenen Signal erzeugt wird, bei welchem sich für die Nachricht die Buszustände des Signals in einer ersten Kommunikationsphase unterscheiden von Buszuständen des in einer zweiten Kommunikationsphase empfangenen Signals, und einem Auswertemodul zum Auswerten der Differenz, die sich aus einem Vergleich der von dem Sendesignalanalysemodul gezählten Flanken und der von dem Empfangssignalanalysemodul gezählten Flanken ergibt, wobei das Auswertemodul für den Fall, in dem die Signallaufzeit auf dem Bus größer als die Bitzeit des Empfangssignals ist, ausgestaltet ist zu signalisieren, ob der Betrag der Differenz kleiner als oder gleich einem vorbestimmten Wert ist, oder ob der Betrag der Differenz größer als der vorbestimmte Wert ist, und wobei der vorbestimmte Wert größer als Null ist, wie in Anspruch 1 beschrieben.

Die Einrichtung ermöglicht, dass ein Sendekonflikt in dem Bussystem ohne großen Aufwand erkennbar ist. Die Einrichtung ist in der Lage zu erkennen, ob eine andere Teilnehmerstation bzw. ihre Sende-Empfangseinrichtung gleichzeitig mit der eigenen Teilnehmerstation bzw. ihrer Sende-Empfangseinrichtung einen anderen Buszustand treibt, ob also ein Konflikt vorliegt. Dadurch können die Vorteile von CAN-Bussystemen beibehalten werden, auch wenn derart hohe Bitraten verwendet werden, bei denen die Signallaufzeit von dem Sendesignal TxD zu dem Empfangssignal RxD wesentlich größer ist als die Länge eines Bits.

Hierbei werden von der Einrichtung nur zwei Zähler verwendet, die jeweils mit der Empfangsnachricht Rx und der Sendenachricht Tx getaktet werden und miteinander verglichen werden, um einen Sendekonflikt auf dem Bus zu erkennen. Dadurch ist es nicht erforderlich, die aktuellen Werte der Empfangsnachricht Rx und der Sendenachricht Tx direkt miteinander zu vergleichen. Ein solcher direkter Vergleich würde eine Messung der Signallaufzeit und die Zwischenspeicherung einer Folge der letzten Werte der Sendenachricht Tx zur Auswertung mit einem Protokoll-Steuerwerk erfordern und wäre daher sehr aufwändig.

Aufgrund der Ausgestaltung der Einrichtung ist auch in dem Fall, dass in der Datenphase beide Buszustände in einem Rahmen aktiv getrieben werden, das Erkennen eines Sendekonfliktes möglich. Dies gilt auch, wenn es auf dem Bus zu einer Überlagerung von getriebenen Signalen kommt, wodurch sich "analoge" Pegel auf dem Bus einstellen, so dass ein Sendekonflikt durch den Vergleich von Sendesignal TXD und Empfangssignal RXD nicht mehr sicher erkennbar ist, da das resultierende Empfangssignal RXD nicht mehr genau vorhersagbar ist. Daher kann aufgrund der beschriebenen Einrichtung eine Auswertung durch einen Mikrocontroller bzw. ein Protokoll-Steuerwerk in der Einrichtung und/oder durch die Kommunikationssteuereinrichtung entfallen.

Daher ist jede Teilnehmerstation des Bussystems aufgrund der Ausgestaltung der Einrichtung in der Lage, bei Bedarf die Sendung einer beliebigen anderen Teilnehmerstation mit einem Fehlerrahmen zu stören bzw. zu unterbrechen. Aus Sicht des Anwenders ist dies sehr vorteilhaft, da dadurch im Fehlerfall Zeit gespart werden kann, indem eine derzeit gesendete Nachricht abgebrochen wird und danach andere Information auf dem Bus übertragen werden kann. Das ist insbesondere bei Rahmen von großem Nutzen, die länger sind als ein CAN FD Rahmen mit 64 Byte in der Datenphase, insbesondere bei Rahmen die 2-4kbyte oder mehr enthalten sollen.

Als Folge davon kann mit der Einrichtung, die insbesondere eine Sende-/Empfangseinrichtung ist, auch bei Steigerung der Menge der Nutzdaten pro Rahmen ein Empfang der Rahmen mit großer Flexibilität im Hinblick auf aktuelle Ereignisse im Betrieb des Bussystems und mit geringer Fehlerquote gewährleistet werden. Somit kann in dem seriellen Bussystem auch mit großer Fehlerrobustheit kommuniziert werden, wenn eine hohe Datenrate und eine Steigerung der Menge der Nutzdaten pro Rahmen erfolgt.

Daher ist es mit der Einrichtung in dem Bussystem insbesondere möglich, in einer ersten Kommunikationsphase eine von CAN bekannte Arbitration beizubehalten und dennoch die Übertragungsrate gegenüber CAN oder CAN FD nochmals beträchtlich zu steigern.

Dies trägt mit dazu bei, eine Nettodatenrate von mindestens 10 Mbit pro Sekunde zu realisieren. Noch dazu kann die Größe der Nutzdaten pro Rahmen bis zu 4096 Byte oder mehr betragen.

Das von der Einrichtung durchgeführte Verfahren kann auch zum Einsatz kommen, wenn in dem Bussystem auch mindestens eine CAN FD tolerante CAN-Teilnehmerstation, die gemäß dem Standard der ISO 11898-1:2015 ausgestaltet ist, und/oder mindestens eine CAN FD Teilnehmerstation vorhanden sind/ist, die Nachrichten nach dem CAN-Protokoll und/oder CAN FD Protokoll senden/sendet.

Vorteilhafte weitere Ausgestaltungen der Einrichtung sind in den abhängigen Ansprüchen angegeben.

Gemäß einem Ausführungsbeispiel hat das Sendesignalanalysemodul einen Zähler zum Zählen von fallenden Flanken des Sendesignals, und das Empfangssignalanalysemodul hat einen Zähler zum Zählen von fallenden Flanken des Empfangssignals.

Gemäß einem anderen Ausführungsbeispiel hat das Sendesignalanalysemodul einen ersten Zähler zum Zählen von fallenden Flanken des Sendesignals und einen zweiten Zähler zum Zählen von steigenden Flanken des Sendesignals, und das Empfangssignalanalysemodul hat einen ersten Zähler zum Zählen von fallenden Flanken des Empfangssignals und einen zweiten Zähler zum Zählen von steigenden Flanken des Empfangssignals, wobei das Auswertemodul zum Auswerten der Differenz, die sich aus einem Vergleich der von den ersten Zählern gezählten Flanken ergibt, und zum Auswerten der Differenz, die sich aus einem Vergleich der von den zweiten Zählern gezählten Flanken ergibt, ausgestaltet ist.

Gemäß einer speziellen Ausführungsvariante ist das Auswertemodul für den Fall, in dem die Signallaufzeit auf dem Bus kleiner als oder gleich der Bitzeit des Empfangssignals ist, ausgestaltet zu signalisieren, ob der Betrag der Differenz gleich Null ist, oder ob der Betrag der Differenz größer als Null ist.

Möglicherweise ist das Auswertemodul ausgestaltet, die Auswertung nach einem Inkrementieren des Zählwerts durch das Empfangssignalanalysemodul auszuführen, wobei das Auswertemodul ausgestaltet ist, die Signalisierung der Auswertung an dem Anschluss der Einrichtung auszugeben, an welchem das Empfangssignal aus der Einrichtung auszugeben ist.

Das Sendesignalanalysemodul kann ausgestaltet sein, das Sendesignal als Takt für das Zählen zu verwenden und Überschwingungen an den Flanken des Sendesignals auszufiltern. Zusätzlich oder alternativ kann das Empfangssignalanalysemodul ausgestaltet sein, das Empfangssignal als Takt für das Zählen zu verwenden und Überschwingungen an den Flanken des Empfangssignals auszufiltern.

Gemäß einer speziellen Ausführungsvariante sind die Buszustände des in der ersten Kommunikationsphase von dem Bus empfangenen Signals mit einem anderen Physical Layer erzeugt als die Buszustände des in der zweiten Kommunikationsphase empfangenen Signals.

Möglicherweise wird in der ersten Kommunikationsphase ausgehandelt, welche der Teilnehmerstationen des Bussystems in der nachfolgenden zweiten Kommunikationsphase einen zumindest zeitweise exklusiven, kollisionsfreien Zugriff auf den Bus bekommt.

Die Einrichtung hat zudem ein Sendemodul zum Senden von Nachrichten auf einen Bus des Bussystems, wobei das Sendemodul beim Senden der verschiedenen Kommunikationsphasen einer Nachricht ausgestaltet sein kann, zwischen einer ersten Betriebsart und einer zweiten Betriebsart zu schalten. Hierbei ist möglicherweise das Sendemodul in der ersten Betriebsart ausgestaltet, einen ersten Datenzustand als Buszustand mit unterschiedlichen Buspegeln für zwei Busadern der Busleitung zu erzeugen und einen zweiten Datenzustand als Buszustand mit demselben Buspegel für die zwei Busadern der Busleitung zu erzeugen, und wobei das Sendemodul in der zweiten Betriebsart ausgestaltet ist, den ersten und zweiten Datenzustand jeweils als Buszustand mit unterschiedlichen Buspegeln für die zwei Busadern der Busleitung zu erzeugen.

Die Einrichtung kann zudem ein Empfangsmodul zum Erzeugen des Empfangssignals aus dem von dem Bus empfangenen Signal aufweisen, wobei das Empfangsmodul ausgestaltet ist, in der ersten Kommunikationsphase, eine Empfangsschwelle zu verwenden, deren Spannungswert sich von einem Spannungswert einer Empfangsschwelle in der zweiten Kommunikationsphase unterscheidet.

Die zuvor beschriebene Einrichtung kann Teil einer Teilnehmerstation für ein serielles Bussystem sein, die zudem eine Kommunikationssteuereinrichtung zum Steuern einer Kommunikation der Teilnehmerstation mit mindestens einer anderen Teilnehmerstation des Bussystems aufweist. Hierbei ist die Einrichtung mit der Kommunikationssteuereinrichtung derart verbunden, dass die Signalisierung des Auswertemoduls an die Kommunikationssteuereinrichtung ausgegeben wird.

Hierbei besteht die Option, dass die Einrichtung ausgestaltet ist, der Kommunikationssteuereinrichtung mit dem Empfangssignal oder mit einem Signal über eine separate Leitung die Auswertung des Auswertemoduls zu signalisieren, um einen Sendekonflikt auf dem Bus anzuzeigen, wobei die Kommunikationssteuereinrichtung ausgestaltet ist, das Sendesignal auf der Grundlage des Signals zu erzeugen oder abzubrechen und/oder anderen Teilnehmerstationen des Bussystems den Sendekonflikt zu signalisieren.

Die zuvor beschriebene Teilnehmerstation kann Teil eines Bussystems sein, das zudem einen Bus und mindestens zwei Teilnehmerstationen umfasst, welche über den Bus derart miteinander verbunden sind, dass sie seriell miteinander kommunizieren können. Hierbei ist mindestens eine der mindestens zwei Teilnehmerstationen eine zuvor beschriebene Teilnehmerstation.

Die zuvor genannte Aufgabe wird zudem durch ein Verfahren zur Kommunikation in einem seriellen Bussystem nach Anspruch 15 gelöst. Das Verfahren weist die Schritte auf, Zählen, mit einem Sendesignalanalysemodul, von Flanken eines Sendesignals, das auf einen Bus des Bussystems zu senden ist, um eine Nachricht, zwischen Teilnehmerstationen des Bussystems auszutauschen, Zählen, mit einem Empfangssignalanalysemodul, von Flanken eines Empfangssignals, das aus einem auf dem Bus aufgrund des Sendesignals übertragenen Signal erzeugt wird, bei welchem sich für die Nachricht die Buszustände des Signals in einer ersten Kommunikationsphase unterscheiden von Buszuständen des in einer zweiten Kommunikationsphase empfangenen Signals, und Auswerten, mit einem Auswertemodul, der Differenz, die sich aus einem Vergleich der von dem Sendesignalanalysemodul gezählten Flanken und der von dem Empfangssignalanalysemodul gezählten Flanken ergibt, Signalisieren, mit dem Auswertemodul, für den Fall, in dem die Signallaufzeit auf dem Bus größer als die Bitzeit des Empfangssignals ist, ob der Betrag der Differenz kleiner als oder gleich einem vorbestimmten Wert ist, oder ob der Betrag der Differenz größer als der vorbestimmte Wert ist, wobei der vorbestimmte Wert größer als Null ist, wie in Anspruch 15 beschrieben.

Das Verfahren bietet dieselben Vorteile, wie sie zuvor in Bezug auf die Einrichtung und/oder die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus von Nachrichten, die von einer Sende-/Empfangseinrichtung für eine Teilnehmerstationen des Bussystems gemäß dem ersten Ausführungsbeispiel gesendet werden können;
Fig. 3 ein vereinfachtes schematisches Blockschaltbild einer Teilnehmerstation des Bussystems gemäß dem ersten Ausführungsbeispiel;
Fig. 4 ein Beispiel für einen zeitlichen Verlauf eines Sendesignals TxD, das von einer Teilnehmerstation des Bussystems gemäß dem ersten Ausführungsbeispiel auf einen Bus des Bussystems gesendet wird;
Fig. 5 einen zeitlichen Verlauf von Bussignalen CAN-XL_H und CAN-XL_L, die sich im Normalbetrieb in Folge des Sendesignals TxD von Fig. 4 auf dem Bus einstellen;
Fig. 6 einen zeitlichen Verlauf einer Differenzspannung VDIFF, die aus den Bussignalen CAN-XL_H und CAN-XL_L von Fig. 5 resultiert;
Fig. 7 einen zeitlichen Verlauf eines Empfangssignals Rx_In, das eine Teilnehmerstation des Bussystems von dem Bus empfängt bzw. aus den Signalen von Fig. 5 und Fig. 6 erzeugt;
Fig. 8 ein Beispiel für einen zeitlichen Verlauf eines Sendesignals TxD1 in einer Datenphase einer Nachricht, die von einer ersten Teilnehmerstation des Bussystems gemäß dem ersten Ausführungsbeispiel gesendet wird;
Fig. 9 ein Beispiel für einen zeitlichen Verlauf eines Sendesignals TxD2, das von einer anderen Teilnehmerstation zum Abbruch des Sendesignals TxD1 von Fig. 8 gesendet wird;
Fig. 10 einen zeitlichen Verlauf von Bussignalen CAN-XL_H und CAN-XL_L, die sich aufgrund der Sendesignale TxDl, TxD2 von Fig. 8 und Fig. 9 auf dem Bus einstellen;
Fig. 11 einen zeitlichen Verlauf einer Differenzspannung VDIFF, die aus den Bussignalen CAN-XL_H und CAN-XL_L von Fig. 10 resultiert;
Fig. 12 einen zeitlichen Verlauf eines Empfangssignals Rx_In, das eine Teilnehmerstation des Bussystems von dem Bus empfängt bzw. aus den Signalen von Fig. 10 und Fig. 11 erzeugt; und
Fig. 13 ein vereinfachtes schematisches Blockschaltbild einer Teilnehmerstation des Bussystems gemäß einem zweiten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

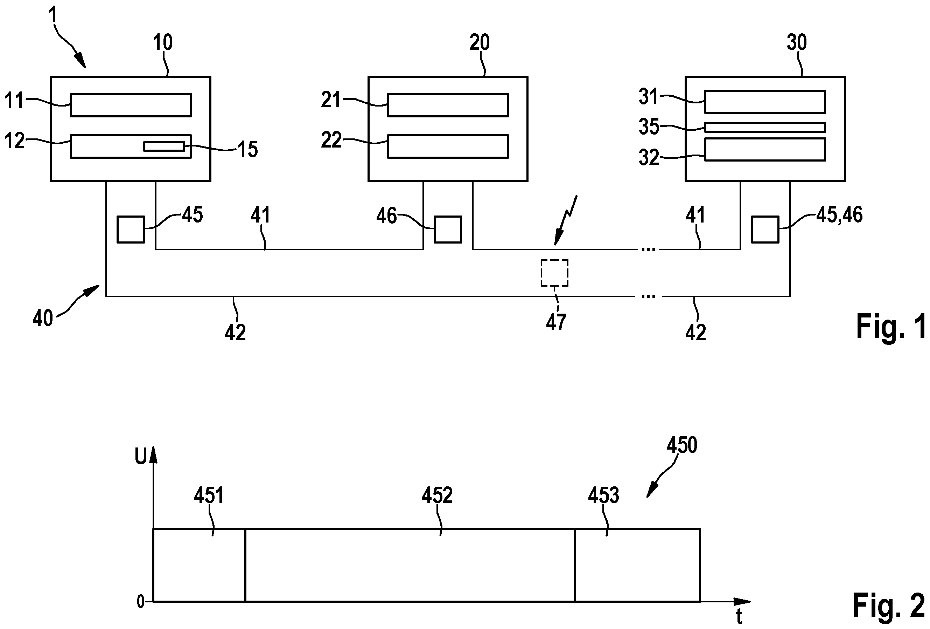

Fig. 1 zeigt als Beispiel ein Bussystem 1, das insbesondere grundlegend für ein CAN-Bussystem, ein CAN FD-Bussystem, ein CAN XL-Bussystem, und/oder Abwandlungen davon, ausgestaltet ist, wie nachfolgend beschrieben. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L oder CAN-XL_H und CAN-XL_L genannt werden und dienen zur elektrischen Signalübertragung nach Einkopplung der Differenz-Pegel bzw. Erzeugung von rezessiven Pegeln für ein Signal im Sendezustand. Über den Bus 40 sind Nachrichten 45, 46 in der Form von Signalen zwischen den einzelnen Teilnehmerstationen 10, 20, 30 seriell übertragbar. Tritt bei der Kommunikation auf dem Bus 40 ein Fehler auf, wie durch den gezackten schwarzen Blockpfeil in Fig. 1 dargestellt, kann ein Fehlerrahmen 47 (Error Flag) gesendet werden. Die Teilnehmerstationen 10, 20, 30 sind beispielsweise Steuergeräte, Sensoren, Anzeigevorrichtungen, usw. eines Kraftfahrzeugs.

Wie in Fig. 1 gezeigt, hat die Teilnehmerstation 10 eine Kommunikationssteuereinrichtung 11, eine Sende-/Empfangseinrichtung 12 und eine Fehlererfassungseinrichtung 15. Die Teilnehmerstation 20 hat dagegen eine Kommunikationssteuereinrichtung 21 und eine Sende-/Empfangseinrichtung 22. Die Teilnehmerstation 30 hat eine Kommunikationssteuereinrichtung 31, eine Sende-/Empfangseinrichtung 32 und eine Fehlererfassungseinrichtung 35. Die Sende-/Empfangseinrichtungen 12, 22, 32 der Teilnehmerstationen 10, 20, 30 sind jeweils direkt an den Bus 40 angeschlossen, auch wenn dies in Fig. 1 nicht veranschaulicht ist.

Die Kommunikationssteuereinrichtungen 11, 21, 31 dienen jeweils zur Steuerung einer Kommunikation der jeweiligen Teilnehmerstation 10, 20, 30 über den Bus 40 mit mindestens einer anderen Teilnehmerstation der Teilnehmerstationen 10, 20, 30, die an den Bus 40 angeschlossen sind.

Die Kommunikationssteuereinrichtung 11 erstellt und liest erste Nachrichten 45, die beispielsweise modifizierte CAN Nachrichten 45 sind. Hierbei sind die modifizierten CAN Nachrichten 45 auf der Grundlage eines CAN XL-Formats aufgebaut, das in Bezug auf Fig. 2 detaillierter beschrieben ist.

Die Kommunikationssteuereinrichtung 21 kann wie ein herkömmlicher CAN-Controller nach ISO 11898-1:2015 ausgeführt sein. Die Kommunikationssteuereinrichtung 21 erstellt und liest zweite Nachrichten 46, beispielsweise Classical CAN-Nachrichten 46. Die Classical CAN-Nachrichten 46 sind gemäß dem Classical Basisformat aufgebaut, bei welchem in der Nachricht 46 eine Anzahl von bis zu 8 Datenbytes umfasst sein können. Alternativ ist die Classical CAN-Nachricht 46 als CAN FD Nachricht aufgebaut, bei welcher eine Anzahl von bis zu 64 Datenbytes umfasst sein können, die noch dazu mit einer deutlich schnelleren Datenrate als bei der Classical CAN-Nachricht 46 übertragen werden. Im letzteren Fall ist die Kommunikationssteuereinrichtung 21 wie ein herkömmlicher CAN FD-Controller ausgeführt.

Die Kommunikationssteuereinrichtung 31 kann ausgeführt sein, um je nach Bedarf eine CAN XL-Nachricht 45 oder eine Classical CAN-Nachricht 46 für die Sende-/Empfangseinrichtung 32 bereitzustellen oder von dieser zu empfangen. Die Kommunikationssteuereinrichtung 31 erstellt und liest also eine erste Nachricht 45 oder zweite Nachricht 46, wobei sich die erste und zweite Nachricht 44, 46 durch ihren Datenübertragungsstandard unterscheiden, nämlich in diesem Fall CAN XL oder CAN. Alternativ ist die Classical CAN-Nachricht 46 als CAN FD Nachricht aufgebaut. Im letzteren Fall ist die Kommunikationssteuereinrichtung 31 wie ein herkömmlicher CAN FD-Controller ausgeführt.

Die Sende-/Empfangseinrichtung 12 kann bis auf die nachfolgend noch genauer beschriebenen Unterschiede als CAN XL-Transceiver ausgeführt sein. Die Sende-/Empfangseinrichtung 22 kann wie ein herkömmlicher CAN Transceiver oder CAN FD Transceiver ausgeführt sein. Die Sende-/Empfangseinrichtung 32 kann ausgeführt sein, um je nach Bedarf Nachrichten 45 gemäß dem CAN XL-Format oder Nachrichten 46 gemäß dem derzeitigen CAN-Basisformat für die Kommunikationssteuereinrichtung 31 bereitzustellen oder von dieser zu empfangen. Die Sende-/Empfangseinrichtungen 12, 32 sind zusätzlich oder alternativ wie ein herkömmlicher CAN FD Transceiver ausführbar.

Mit den beiden Teilnehmerstationen 10, 30 ist eine Bildung und dann Übertragung von Nachrichten 45 mit dem CAN XL-Format sowie der Empfang solcher Nachrichten 45 realisierbar.

Fig. 2 zeigt für die Nachricht 45 einen CAN XL Rahmen 450, wie er von der Sende-/Empfangseinrichtung 12 oder der Sende-/Empfangseinrichtung 32 gesendet wird. Der CAN XL-Rahmen 450 ist für die CAN-Kommunikation auf dem Bus 40 in unterschiedliche Kommunikationsphasen 451 bis 453 unterteilt, nämlich eine Arbitrationsphase 451, eine Datenphase 452 und eine Rahmenendphase 453.

In der Arbitrationsphase 451 wird mit Hilfe eines Identifizierers bitweise zwischen den Teilnehmerstationen 10, 20, 30 ausgehandelt, welche Teilnehmerstation 10, 20, 30 die Nachricht 45, 46 mit der höchsten Priorität senden möchte und daher für die nächste Zeit zum Senden in der anschließenden Datenphase 452 einen exklusiven Zugriff auf den Bus 40 des Bussystems 1 bekommt.

In der Datenphase 452 werden die Nutzdaten des CAN XL-Rahmens bzw. der Nachricht 45 gesendet. Die Nutzdaten können entsprechend dem Wertebereich eines Datenlängencodes beispielsweise bis zu 4096 Bytes oder einen größeren Wert aufweisen.

In der Rahmenendphase 453 kann beispielsweise in einem Prüfsummenfeld eine Prüfsumme über die Daten der Datenphase 452 einschließlich der Stuffbits enthalten sein, die vom Sender der Nachricht 45 nach jeweils einer vorbestimmten Anzahl von gleichen Bits, insbesondere 10 gleichen Bits, als inverses Bit eingefügt werden. Zudem kann in einem Endefeld in der Rahmenendphase 453 mindestens ein Acknowledge-Bit enthalten sein. Außerdem kann eine Folge von 11 gleichen Bits vorhanden sein, welche das Ende des CAN XL-Rahmens 450 anzeigen. Mit dem mindestens einen Acknowledge-Bit kann mitgeteilt werden, ob ein Empfänger in dem empfangenen CAN XL-Rahmen 450 bzw. der Nachricht 45 einen Fehler entdeckt hat oder nicht.

In der Arbitrationsphase 451 und der Rahmenendphase 453 wird ein Physical Layer wie bei CAN und CAN FD verwendet. Der Physical Layer entspricht der Bitübertragungsschicht oder Schicht 1 des bekannten OSI-Modells (Open Systems Interconnection Modell).

Ein wichtiger Punkt während der Phasen 451, 453 ist, dass das bekannte CSMA/CR-Verfahren Verwendung findet, welches gleichzeitigen Zugriff der Teilnehmerstationen 10, 20, 30 auf den Bus 40 erlaubt, ohne dass die höher priorisierte Nachricht 45, 46 zerstört wird. Dadurch können dem Bussystem 1 relativ einfach weitere Bus-Teilnehmerstationen 10, 20, 30 hinzugefügt werden, was sehr vorteilhaft ist.

Das CSMA/CR-Verfahren hat zur Folge, dass es sogenannte rezessive Zustände auf dem Bus 40 geben muss, welche von anderen Teilnehmerstationen 10, 20, 30 mit dominanten Zuständen auf dem Bus 40 überschrieben werden können. Im rezessiven Zustand herrschen an der einzelnen Teilnehmerstation 10, 20, 30 hochohmige Verhältnisse, was in Kombination mit den Parasiten der Busbeschaltung längere Zeitkonstanten zur Folge hat. Dies führt zu einer Begrenzung der maximalen Bitrate des heutigen CAN FD-Physical-Layer auf derzeit etwa 2 Megabit pro Sekunde im realen Fahrzeug-Einsatz.

Ein Sender der Nachricht 45 beginnt ein Senden von Bits der Datenphase 452 auf den Bus 40 erst, wenn die Teilnehmerstation 10 als der Sender die Arbitration gewonnen hat und die Teilnehmerstation 10 als Sender damit zum Senden einen exklusiven Zugriff auf den Bus 40 des Bussystems 1 hat.

Ganz allgemein können in dem Bussystem mit CAN XL im Vergleich zu CAN oder CAN FD folgende abweichenden Eigenschaften realisiert werden:
a) Übernahme und ggf. Anpassung bewährter Eigenschaften, die für die Robustheit und Anwenderfreundlichkeit von CAN und CAN FD verantwortlich sind, insbesondere Rahmenstruktur mit Identifier und Arbitrierung nach dem CSMA/CR-Verfahren,
b) Steigerung der Netto-Datenübertragungsrate auf etwa 10 Megabit pro Sekunde,
c) Anheben der Größe der Nutzdaten pro Rahmen auf etwa 4kbyte.

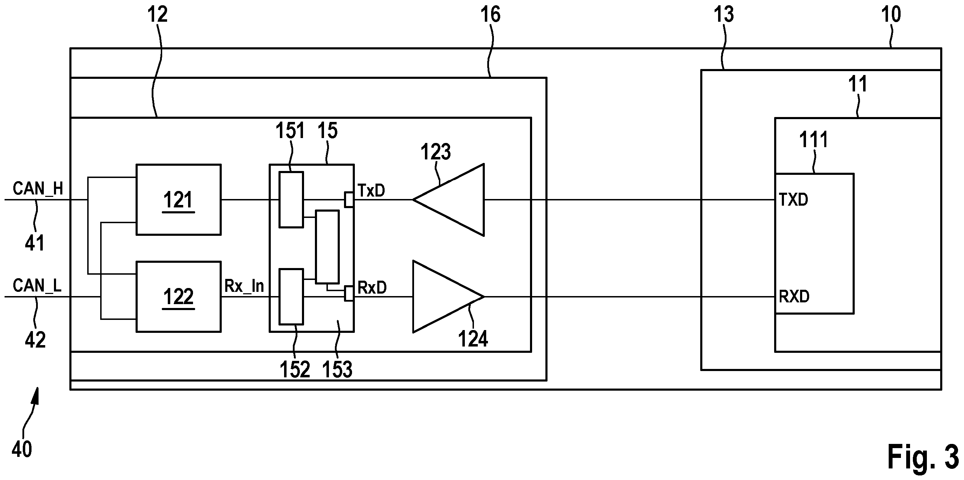

Fig. 3 zeigt den grundlegenden Aufbau der Teilnehmerstation 10 mit der Kommunikationssteuereinrichtung 11, der Sende-/Empfangseinrichtung 12 und der Fehlererfassungseinrichtung 15. Die Teilnehmerstation 30 ist in ähnlicher Weise aufgebaut, wie in Fig. 3 gezeigt, außer dass die Fehlererfassungseinrichtung 35 nicht in die Sende-/ Empfangseinrichtung 32 integriert ist, sondern separat von der Kommunikationssteuereinrichtung 31 und der Sende-/Empfangseinrichtung 32 vorgesehen ist. Daher werden die Teilnehmerstation 30 und die Fehlererfassungseinrichtung 35 nicht separat beschrieben. Die nachfolgend beschriebenen Funktionen der Einrichtung 15 sind bei der Einrichtung 35 identisch vorhanden.

Gemäß Fig. 3 hat die Teilnehmerstation 10 zusätzlich zu der Kommunikationssteuereinrichtung 11, der Sende-/Empfangseinrichtung 12 und der Einrichtung 15 zudem einen Mikrocontroller 13, welchem die Kommunikationssteuereinrichtung 11 zugeordnet ist, und eine System-ASIC 16 (ASIC = Anwendungsspezifische Integrierte Schaltung), die alternativ ein System Basis-Chip (SBC) sein kann, auf dem mehrere für eine Elektronik-Baugruppe der Teilnehmerstation 10 notwendige Funktionen zusammengefasst sind. In dem System-ASIC 16 ist zusätzlich zu der Sende-/Empfangseinrichtung 12 eine nicht dargestellte Energieversorgungseinrichtung eingebaut, welche die Sende-/Empfangseinrichtung 12 mit elektrischer Energie versorgt. Die Energieversorgungseinrichtung liefert üblicherweise eine Spannung CAN_Supply von 5 V. Je nach Bedarf kann die Energieversorgungseinrichtung jedoch eine andere Spannung mit einem anderen Wert liefern. Zusätzlich oder alternativ kann die Energieversorgungseinrichtung als Stromquelle ausgestaltet sein.

Die Fehlererfassungseinrichtung 15 hat ein Sendesignalanalysemodul 151, ein Empfangssignalanalysemodul 152 und eine Auswerteeinheit 153. Das Sendesignalanalysemodul 151 ist insbesondere als mindestens ein erster Zähler ausgestaltet. Das Empfangssignalanalysemodul 151 ist insbesondere als mindestens ein zweiter Zähler ausgestaltet.

Die Sende-/Empfangseinrichtung 12 hat zudem ein Sendemodul 121, ein Empfangsmodul 122, einen Sendesignaltreiber 123 und einen Empfangssignaltreiber 124. Auch wenn nachfolgend immer von der Sende-/Empfangseinrichtung 12 gesprochen ist, ist es alternativ möglich, das Empfangsmodul 122 mit seinem Empfangssignaltreiber 124 in einer separaten Einrichtung extern von dem Sendemodul 121 mit seinem Sendesignaltreiber 123 vorzusehen. Das Sendemodul 121 und das Empfangsmodul 122 sowie der Sendesignaltreiber 123 und der Empfangssignaltreiber 124 können wie bei einer herkömmlichen Sende-/Empfangseinrichtung 22 aufgebaut sein. Das Sendemodul 121 kann insbesondere mindestens einen Operationsverstärker und/oder einen Transistor aufweisen. Das Empfangsmodul 122 kann insbesondere mindestens einen Operationsverstärker und/oder einen Transistor aufweisen.

Die Sende-/Empfangseinrichtung 12 ist an den Bus 40 angeschlossen, genauer gesagt dessen erste Busader 41 für CAN_H oder CAN-XL_H und dessen zweite Busader 42 für CAN_L oder CAN-XL_L.

Die erste und zweite Busader 41, 42 sind in der Sende-/Empfangseinrichtung 12 nicht nur mit dem Sendemodul 121, das auch als Transmitter bezeichnet wird, und mit dem Empfangsmodul 122 verbunden, das auch als Receiver bezeichnet wird. Die erste und zweite Busader 41, 42 sind in der Sende-/Empfangseinrichtung 12 auch mit der Einrichtung 15 verbunden, auch wenn die Verbindung in Fig. 3 zur Vereinfachung nicht gezeigt ist.

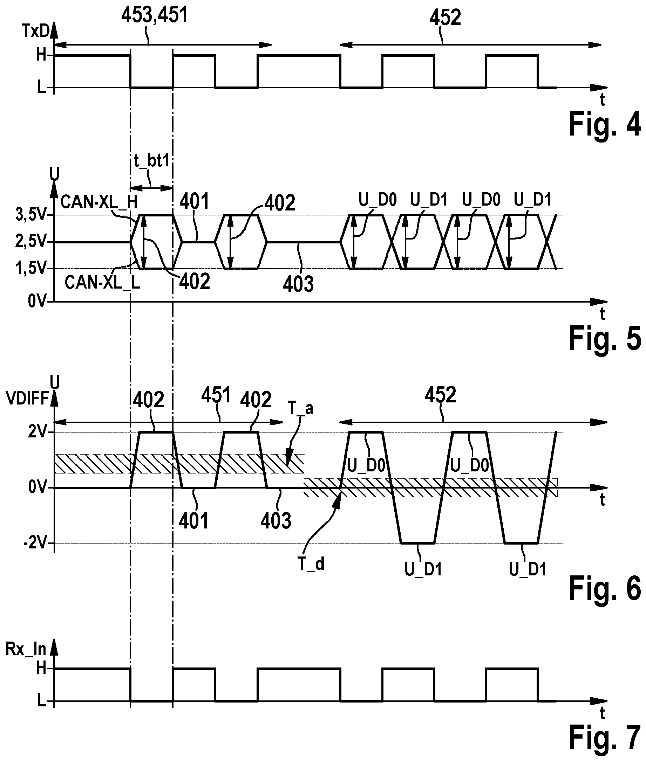

Im Betrieb des Bussystems 1 setzt das Sendemodul 121 ein Sendesignal TXD oder TxD der Kommunikationssteuereinrichtung 11 gemäß Fig. 4 in entsprechende Signale CAN-XL_H und CAN-XL_L gemäß Fig. 5 für die Busadern 41, 42 um und sendet diese Signale CAN-XL_H und CAN-XL_L an den Anschlüssen für CAN-XL_H und CAN-XL_L auf den Bus 40, wie in Fig. 3 gezeigt. Auf dem Bus 40 bildet sich in Folge der Signale von Fig. 5 eine Differenzspannung VDIFF = CAN-XL_H - CAN-XL_L aus, die in Fig. 6 veranschaulicht ist.

Das Empfangsmodul 122 bildet aus den von dem Bus 40 empfangenen Signalen CAN-XL_H und CAN-XL_L gemäß Fig. 5 bzw. deren Differenzspannung VDIFF gemäß Fig. 6 ein Empfangssignal Rx_In wie in Fig. 7 gezeigt, und gibt dieses an die Fehlererfassungseinrichtung 15 weiter, die das Signal Rx_In im Normalbetrieb als RXD oder RxDSignal an die Kommunikationssteuereinrichtung 11 weitergibt, wie in Fig. 3 gezeigt. Das Empfangssignal Rx_In wird in der Arbitrationsphase 451 als Signal RxD weitergegeben. Ist die Teilnehmerstation 10 jedoch Sender in der Datenphase 452, wird es zumindest in einer Ausführungsvariante nicht als Signal RxD weitergegeben, wenn nämlich über die RxD-Leitung ein möglicher Konflikt signalisiert wird. In einem solchen Fall ist das Empfangssignal Rx_In dann nur intern in der Sende-Empfangseinrichtung 12, gegebenenfalls nur in dem Empfangsmodul 122 und der Einrichtung 15, bekannt. Das Protokoll-Steuerwerk 111 muss nur wissen, ob es einen Konflikt gibt oder ob seine Bits über den Anschluss TXD problemlos gesendet werden.

Mit Ausnahme eines Leerlauf- oder Bereitschaftszustands (Idle oder Standby), hört die Sende-/Empfangseinrichtung 12 mit dem Empfangsmodul 122 im Normalbetrieb immer auf eine Übertragung von Daten bzw. Nachrichten 45, 46 auf dem Bus 40 und zwar unabhängig davon, ob die Sende-/Empfangseinrichtung 12 Sender der Nachricht 45 ist oder nicht.

Auch wenn dies in Fig. 4 bis Fig. 7 nicht explizit angegeben ist, hat die Bitrate in den Phasen 451, 453, also bei Arbitration und Rahmenende, einen Wert von maximal 1 Mbit/s. Dagegen kann die Bitrate in der Datenphase 452 den gleichen Wert haben, wie in Fig. 4 bis Fig. 7 gezeigt oder einen höheren Wert, insbesondere 8 Mbit/s oder 10 Mbit/s oder noch höher haben. In einem solchen Fall ist eine Bitzeit t_bt1 in den Phasen 451, 453 deutlich länger als eine Bitzeit t_bt2 in der Datenphase 452.

Gemäß dem Beispiel von Fig. 5 haben die Signale CAN-XL_H und CAN-XL_L in den zuvor genannten Kommunikationsphasen 451, 453 die dominanten und rezessiven Buspegel 401, 402, wie von CAN bekannt. Dagegen unterscheiden sich die Signale CAN-XL_H und CAN-XL_L in der Datenphase 452 von den herkömmlichen Signalen CAN_H und CAN_L, wie nachfolgend noch genauer beschrieben.

Wie aus dem linken Teil von Fig. 5 ablesbar, treibt das Sendemodul 121 nur in den zuvor genannten Kommunikationsphasen 451, 453 die dominanten Zustände 402 der differentiellen Signale CAN-XL_H und CAN-XL_L unterschiedlich. Dagegen sind die Buspegel auf der Busleitung 3 für die rezessiven Zustände 401 in den zuvor genannten Kommunikationsphasen 451, 453 gleich der Spannung Vcc bzw. CAN-Supply von beispielsweise etwa 2,5 V. Somit ergibt sich für eine Spannung VDIFF = CAN-XL_H - CAN-XL_L für die rezessiven Zustände 401 (logische ,1' bzw. H des Sendesignals TxD) ein Wert von 0V und für die dominanten Zustände 402 (logische ,0' bzw. L des Sendesignals TxD) ein Wert von ca. 2,0 V.

Erkennt die Sende-/Empfangseinrichtung 12, insbesondere deren Einrichtung 15, das Ende der Arbitrationsphase 451, so wird das Sendemodul 121 von dem Zustand, der in dem linken Teil von Fig. 4 gezeigt ist, für die Datenphase 452 in einen Zustand umgeschaltet, der im rechten Teil von Fig. 4 gezeigt ist. Das Sendemodul 121 wird somit von einer ersten Betriebsart (Arbitrationphase 451 = Classical CAN) in eine zweite Betriebsart (Datenphase 452 als Sender der Nachricht 45) oder eine dritte Betriebsart (Datenphase 452 als Empfänger jedoch nicht Sender der Nachricht 45) umgeschaltet. Die zweite und dritte Betriebsart unterscheiden sich folgendermaßen.

In der dritten Betriebsart schaltet die empfangende Teilnehmerstation ihren Bustreiber bzw. ihr Sendemodul 121 nicht um, sondern gibt nur "rezessiv", also den Buszustand 401 aus oder treibt den CAN Bus 40 nicht. Außerdem schaltet die empfangende Teilnehmerstation ihre Abtastschwelle für VDIFF auf die Schwelle T_d um. Eine empfangende Teilnehmerstation muss keinen Konflikt erkennen, weil sie nichts sendet. Stattdessen benötigt eine empfangende Teilnehmerstation natürlich das RxD Eingangssignal.

Dagegen gilt in der zweiten Betriebsart, dass die sendende Teilnehmerstation immer einen von zwei Pegeln U_D0, U_D1 aktiv treibt. Außerdem kann die sendende Teilnehmerstation das aktuelle Eingangssignal Rx_In bzw. RxD ignorieren, solange der Kommunikationssteuereinrichtung 11 die Bit-Fehler gemeldet werden. Bei dem vorliegenden Ausführungsbeispiel wird nur die zweite Betriebsart betrachtet (Datenphase 452 als Sender der Nachricht 45).

In der, gegebenenfalls schnelleren, Datenphase 452, stellen sich aufgrund des Sendesignals TxD in dem rechten Teil von Fig. 4 laut Fig. 5 für die Signale CAN-XL_H, CAN-XL_L die Buszustände U_D0, U_D1 entsprechend den Datenzuständen Data_0 bzw. L und Data_1 bzw. H des Sendesignals TXD von Fig. 4 ein.

Die Abfolge der Datenzustände Data_0 bzw. L und Data_1 bzw. H in dem Sendesignal TxD von Fig. 4 und somit der daraus resultierenden Buszustände U_D0, U_D1 für die Signale CAN-XL_H, CAN-XL_L in Fig. 5 und der daraus resultierende Verlauf der Spannung VDIFF von Fig. 6 dient nur der Veranschaulichung der Funktion der Sende-/Empfangseinrichtung 12. Die Abfolge der Datenzustände Data_0 bzw. L und Data_1 bzw. H in dem Sendesignal TxD und somit der Buszustände U_D0, U_D1 ist je nach Bedarf wählbar.

Bei den zuvor beschriebenen Zuständen sind auf der Busleitung des Busses 40 bei dem Zustand Data_0 Buspegel zwischen etwa -0,6 V und etwa -2 V und bei dem Zustand Data_1 Buspegel zwischen etwa 0,6 V und etwa 2 V vorhanden. Bei den Zuständen Data_0 und Data_1 hat die Differenzspannung VDIFF = CAN-XL_H - CAN-XL_L also insbesondere eine maximale Amplitude von etwa 1,4 V, auch wenn Fig. 6 in einem speziellen Beispiel eine Amplitude für VDIFF als 2 V darstellt.

Mit anderen Worten erzeugt das Sendemodul 121 in einer ersten Betriebsart gemäß Fig. 4 einen ersten Datenzustand, beispielsweise Data_0 bzw. L, als Buszustand 402 mit unterschiedlichen Buspegeln für zwei Busadern 41, 42 der Busleitung und einen zweiten Datenzustand, beispielsweise Data_1 bzw. H, als Buszustand 401 mit demselben Buspegel für die zwei Busadern 41, 42 der Busleitung des Busses 40.

Außerdem bildet das Sendemodul 121, für die zeitlichen Verläufe der Signale CAN-XL_H, CAN-XL_L in einer zweiten Betriebsart, welche die Datenphase 452 umfasst, den ersten und zweiten Datenzustand Data_0, Data_1 jeweils als Buszustand U_D0, U_D1 mit unterschiedlichen Buspegeln für die zwei Busadern 41, 42 der Busleitung des Busses 40. Dies ist in Fig. 5 und Fig. 6 gezeigt.

Wie in Fig. 6 dargestellt, verwendet das Empfangsmodul 122 in den Kommunikationsphasen 451, 453 die von CAN/CAN-FD bekannte erste Empfangsschwelle T_a, insbesondere mit der typischen Lage von 0,7 V gemäß der ISO11898-2:2016, um die Buszustände 401, 402 in der ersten Betriebsart sicher erkennen zu können. Dagegen verwendet das Empfangsmodul 122 in der Datenphase 452 eine Empfangsschwelle T_d, welche bei etwa 0 V liegt.

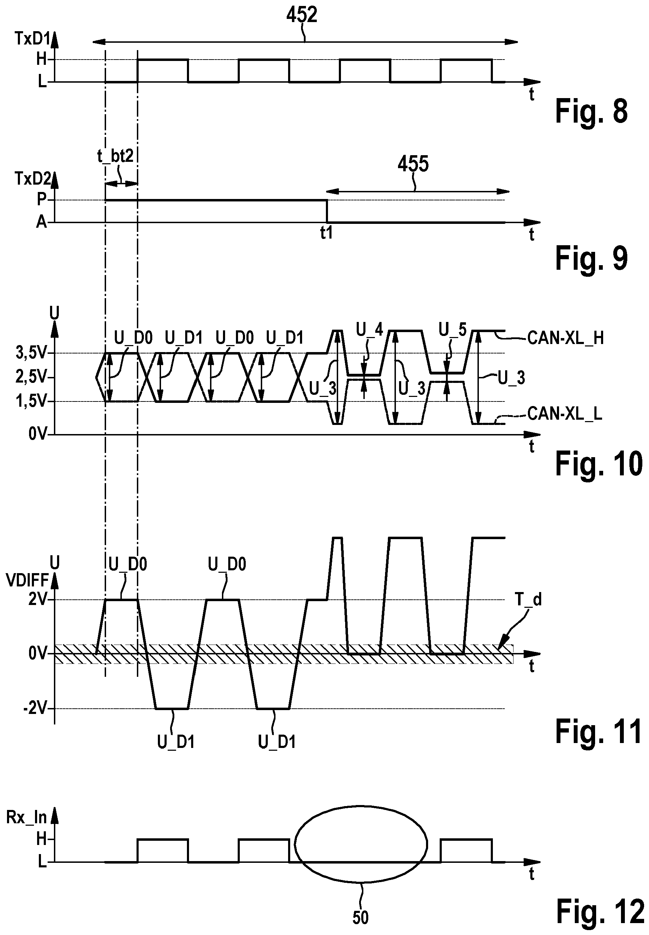

Fig. 8 bis Fig. 12 zeigen für die Datenphase 452 einen Signalverlauf von Signalen TxDl, TxD2 und der Signale CAN-XL_H, CAN-XL_L, deren Differenzspannung VDIFF = CAN-XL_H - CAN-XL_L und des resultierenden Empfangssignals RxD. Bei dem in Fig. 8 bis Fig. 12 gezeigten Fall sendet beispielsweise das Sendemodul 121 das Sendesignal TxD1 von Fig. 8 für einen Rahmen 450, wobei beispielsweise die Teilnehmerstation 30, die in der Datenphase 452 eigentlich nur Empfänger des Rahmens 450 ist, einen Abbruch des Rahmens 450 erreichen möchte und daher das Sendesignal TxD2 von Fig. 9 sendet.

Es gibt verschiedene Gründe, warum ein Abbruch des Rahmens 450 erfolgen soll, beispielsweise:
- die Teilnehmerstation 30 als RX-Teilnehmerstation hat eine Nachricht 45, 46 mit höherer Priorität zu senden, und/oder
- die Teilnehmerstation 30 als RX-Teilnehmerstation hat einen Fehler in der Header Prüfsumme (CRC = Cyclic Redundancy Check) der CAN XL Nachricht 45 festgestellt, und möchte dies signalisieren, und/oder
- die Teilnehmerstation 20, die eine CAN FD Teilnehmerstation ist, hat eventuell das Umschalten zu dem Format des Rahmens 450 aufgrund eines Bit Fehlers nicht erkannt und sendet einen Fehlerrahmen 47 während der Datenphase 452 des Rahmens 450.

Möchte beispielsweise die Teilnehmerstation 30 einen Abbruch des Rahmens 450 erreichen, welchen das Sendemodul 121 der Teilnehmerstation 10 mit dem Signal TxD1 von Fig. 8 sendet, so sendet die Teilnehmerstation 30 das Sendesignal TxD2 gemäß Fig. 9 zum Bus 40. In Folge dessen stellen sich die Signalverläufe für CAN-XL_H und CAN-XL_L und deren Differenzspannung VDIFF ein. In der Phase 455 des Sendens des Fehlerrahmens 47, die mit der fallenden Flanke des Sendesignals TxD2 beginnt, ergeben sich daher Spannungszustände auf dem Bus 40, die von den Spannungszuständen auf dem Bus 40 im Normalbetrieb der Datenphase 452 abweichen und die zuvor in Bezug auf Fig. 4 bis Fig. 7 beschrieben sind.

Ganz allgemein gilt, dass die sendende Teilnehmerstation, die das Sendesignal TxD1 sendet, in der Datenphase 452 auf einen Betrieb umschaltet, in dem beide logischen Pegel der Sendesignale TxD, TxDl, TxD2 mit unterschiedlichen Differenzspannungen auf den Bus 40 getrieben werden. Dagegen wird für alle empfangenden Teilnehmerstationen, wie die Teilnehmerstation 30 bei dem genannten Beispiel, die Empfangsschwelle Td eingeschaltet. Hierbei bleibt jedoch der Bustreiber der empfangenden Teilnehmerstation 30 im Empfangszustand (CAN-recessive-state), bis die empfangende Teilnehmerstation 30 eventuell den Fehlerrahmen 47 sendet, wie in Fig. 9 für das Sendesignal TxD2 gezeigt und zuvor erwähnt. Der Fehlerrahmen 47 gemäß dem rechten Teil von Fig. 9 kann dann als "dominant" oder als Differenzspannung VDIFF für den logischen Pegel '0' gesendet werden. Da beide Alternativen möglich sind, sind die beiden Zustände in Fig. 9 für das Sendesignal TxD2 als P für Passive und A für Active bezeichnet. Für Interoperabilität mit CAN/CAN-FD ist der Fehlerrahmen 47 durch die Aneinanderreihung von 6 oder mehr (je nach Bit-Stuffing-Methode) Bits mit positivem VDIFF wählbar.

In Fig. 9 beginnt der Fehlerrahmen 47 mit der fallenden Flanke an TxD2 zu einem Zeitpunkt t1. In der Folge davon, was in Fig. 9 als Phase 455 bezeichnet ist, verändert sich der transiente Verlauf der Differenzspannung VDI FF in Fig. 11 sehr stark. Dies kann, wie in Fig. 12 schematisch mit dem elliptischen Bereich 50 dargestellt, zu einem nicht erkannten Rezessivpuls am Empfangssignal Rx_In führen.

Über die Darstellung in Fig. 11 hinaus ist die Differenzspannung VDIFF im realen Fall noch von hochfrequenten Schwingungen überlagert, welche durch Bustopologie, Phasenlage und Impedanz der Teilnehmerstation 10, 20, 30 bestimmt sind, die den Fehlerrahmen 47 sendet.

Da bestimmte Fehler am Bus 40 auch mit zusätzlichen Empfangsschwellen in der Datenphase 452 nicht erkannt werden können, ist die Fehlererfassungseinrichtung 15 bereitgestellt.

Die Fehlererfassungseinrichtung 15 erfasst mit dem Sendesignalanalysemodul 151 das Signal TxD, welches kommend von der Kommunikationssteuereinrichtung 11, genauer gesagt ihrem Protokoll-Steuerwerk 111, mittels TxD-Treiber 123 bereitgestellt wird. Somit kann das hier genannte Signal TxD entweder das Signal TxD von Fig. 4 oder das Signal TxD1 von Fig. 8 oder das Signal TxD2 von Fig. 9 sein. Außerdem erfasst die Fehlererfassungseinrichtung 15 mit ihrem Empfangssignalanalysemodul 152 das Rx_In Ausgangssignal des Empfangsmoduls 122, wie beispielsweise in Fig. 8 oder Fig. 12 gezeigt. Danach wird das RxD Ausgangssignal über den RxD-Treiber 124 für die Kommunikationssteuereinrichtung 11, genauer gesagt ihr Protokoll-Steuerwerk 111, bereitgestellt.

Hierbei zählt das Sendesignalanalysemodul 151 die Anzahl von Flanken des Signals TxD, insbesondere jede fallende Flanke. Jede Flanke am Sendesignal TxD wird auf dem Bus 40 umgesetzt und vom Empfangsmodul 122 der jeweiligen Teilnehmerstation 10, 20, 30 wieder empfangen und detektiert. Das Empfangssignalanalysemodul 152 zählt die Anzahl von Flanken des Signals RxD, insbesondere jede fallende Flanke.

Das Zählen der Flanken mit den Modulen 151, 152 kann jeweils mit den Signalen Rx_In und TxD getaktet werden. Beispielsweise können die Module 151, 152 ihren Flankenzählwert bei jeder fallenden Flanke inkrementieren. Wenn die Signale Rx_In und TxD als Takt verwendet werden, können die Module 151, 152 und/oder die Einrichtung 15 mindestens ein Filtermodul aufweisen, das Überschwingungen an den Flanken durch geeignete Maßnahmen herausfiltert. Das mindestens eine Filtermodul kann insbesondere ein Schmitt-Trigger und/oder ein Tiefpass-Filter sein oder aufweisen.

Das Auswertemodul 153 bildet die Differenz der beiden Zählwerte der Flanken der Module 151, 152. Dadurch werden die beiden Zählerstände oder Zählwerte der Module 151, 152 miteinander verglichen. Hierbei wird der Prüf-Zeitpunkt oder der Auswertezeitpunkt mit dem Auswertemodul 153 auf den Zeitpunkt nach dem RxD-Inkrement festgelegt. Wenn die Signallaufzeit geringer ist als die Bitlänge, sind die Zählwerte der Module 151, 152 bei dem Prüf-Zeitpunkt oder dem Auswertezeitpunkt mit dem Auswertemodul 153 gleich. Wenn die Signallaufzeit größer ist als die Bitlänge, wird die Signallaufzeit dadurch kompensiert, dass eine kleine Differenz zwischen den Zählwerten der Module 151, 152 toleriert wird. Die erlaubte Differenz, die auch Toleranzwert genannt werden kann, ist abhängig von Signallaufzeit und Bitlänge in dem Auswertemodul 153 konfigurierbar. Beispielsweise wäre bei einer Signallaufzeit von max. 250 ns von dem Sendesignal TXD bis zu dem Empfang des Empfangssignals RX_In an der Einrichtung 12 und einer Bitzeit t_bt2 von 100 ns die tolerierte Differenz ≤ 3. Die Differenz kann als eine beliebige natürliche Zahl N, die gleich oder größer als 1 ist, festgelegt werden.

Mit anderen Worten, im fehlerfreien Normalfall ist die Differenz der beiden Zählwerte der Flanken der Module 151, 152 Null.

Ist die Differenz ungleich Null, so weist dies auf eine Störung oder Fehler hin. Eine derartige Störung oder Fehler kann insbesondere durch ein Fehlerrahmen 47 einer anderen Teilnehmerstation 10, 20, 30 auftreten, wie zuvor beschrieben. Der Sender 121 hat dann nämlich in der Datenphase 452 keinen exklusiven, kollisionsfreien Zugriff mehr auf den Bus 40.

Somit wird von der Einrichtung 15 ein Konflikt auf dem Bus 40 erkannt, wenn die Differenz zwischen den beiden Zählwerten der Module 151, 152 zum Auswertezeitpunkt größer ist als der erlaubte Toleranzwert.

Der Konflikt wird dann an die Kommunikationssteuereinrichtung 11, genauer gesagt ihr Protokoll-Steuerwerk 111, gemeldet. Dazu wird bei dem vorliegenden Ausführungsbeispiel während der Datenphase 452 der RxD-Anschluss verwendet. Der Sender des CAN XL Rahmens 450 erwartet dann beispielsweise im konfliktfreien Betrieb einen konstanten H-Pegel (High-Pegel) an dem RxD-Anschluss. Wenn die Einrichtung 15 jedoch einen Konflikt feststellt, wird beispielsweise ein L-Pegel (Low-Pegel an dem RxD-Anschluss ausgegeben, um der Kommunikationssteuereinrichtung 11, genauer gesagt ihrem Protokoll-Steuerwerk 111, den Konflikt zu melden. Selbstverständlich ist es möglich, den Konflikt mit einem anderen Signalmuster über den RxD-Anschluss zu signalisieren.

Somit benötigt die Einrichtung 15 selbst kein Protokoll-Steuerwerk, sondern das bereits vorhandene Protokoll-Steuerwerk 111 der Kommunikationssteuereinrichtung 11 ist ausreichend. Dies ist ein großer Vorteil gegenüber einer Implementierung, bei welcher die Auswerteeinheit 153 die beiden Signale direkt miteinander vergleicht, um bei einer Abweichung der beiden Signale TxD, Rx_in voneinander zu erkennen, dass ein anderer Knoten einen Fehlerrahmen 47 sendet. Bei einem solchen Vergleich der beiden Signale TxD, Rx_In müsste die Signallaufzeit, insbesondere auf dem Bus 40, berücksichtigt, also kompensiert werden, da bei einer Bitrate von beispielsweise 10 Mbit/s die Bitzeit 100 ns beträgt, was unterhalb der Signallaufzeit von bis zu 250 ns liegt. Hierfür wäre in der Einrichtung 15 ein zusätzliches Protokoll-Steuerwerk 111 notwendig.

Die Kommunikationssteuereinrichtung 11 reagiert in der Datenphase 452 auf den signalisierten Sendekonflikt mit dem Abbruch der Datenphase 452 und gegebenenfalls zusätzlich mit dem Senden eines Bitmusters, das den anderen Teilnehmerstationen 20, 30 das Ende der Datenphase 452 signalisiert.

Besonders vorteilhaft an den zuvor beschriebenen Varianten der Bewertung ist, dass die Ausgestaltung des Empfängers 122 bzw. der Sende-/Empfangseinrichtung 12 sowohl für homogene CAN XL-Bussysteme, bei welchen nur CAN XL-Nachrichten 45 und keine CAN FD-Nachrichten 46 versandt werden, als auch für gemischte Bussysteme einsetzbar ist, bei welchen entweder CAN XL-Nachrichten 45 oder CAN FD-Nachrichten 46 versandt werden. Daher ist die Sende-/Empfangseinrichtung 12 universell einsetzbar.

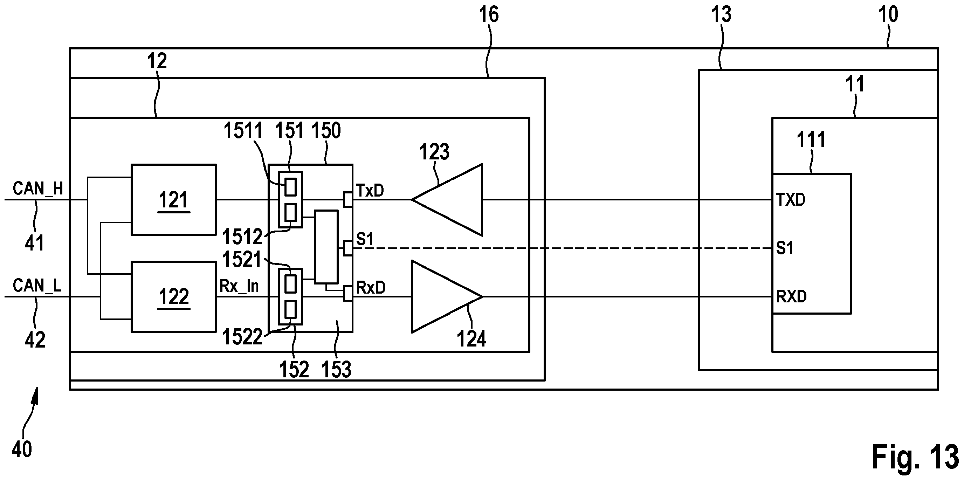

Fig. 13 veranschaulicht eine Ausgestaltung einer Fehlererfassungseinrichtung 150 für die Sende-/Empfangseinrichtung 12 gemäß einem zweiten Ausführungsbeispiel. Die Fehlererfassungseinrichtung 150 ist bis auf die nachfolgend beschriebenen Unterschiede ausgeführt, wie die Fehlererfassungseinrichtung 15 gemäß dem vorangehenden Ausführungsbeispiel.

Gemäß Fig. 13 hat die Fehlererfassungseinrichtung 150 in dem Modul 151 einen ersten und einen zweiten Zähler 1511, 1512. Zudem hat das Modul 152 einen ersten und einen zweiten Zähler 1521, 1522.

Mit dem ersten Zähler 1511 erfasst das Modul 151 fallende Flanken des Sendesignals TxD. Mit dem zweiten Zähler 1512 erfasst das Modul 151 steigende Flanken des Sendesignals TxD. Mit dem ersten Zähler 1521 erfasst das Modul 152 fallende Flanken des Empfangssignals Rx_ln. Mit dem zweiten Zähler 1522 erfasst das Modul 152 steigende Flanken des Empfangssignals Rx_In.

Somit kann das Auswertemodul 153 jeweils die Zählwerte der Zähler 1511, 1521, also die Anzahl der fallenden Flanken in den Signalen TxD, Rx_In, vergleichen. Zusätzlich oder alternativ kann das Auswertemodul 153 jeweils die Zählwerte der Zähler 1512, 1522, also die Anzahl der steigenden Flanken in den Signalen TxD, Rx_In, vergleichen. Zusätzlich oder alternativ kann das Auswertemodul 153 jeweils die Zählwerte der Zähler 1512, 1522, also die Anzahl der fallenden Flanken in dem Signal TxD und die Anzahl der fallenden Flanken in dem Signal Rx_In, vergleichen. Zusätzlich oder alternativ kann das Auswertemodul 153 jeweils die Zählwerte der Zähler 1512, 1522, also die Anzahl der fallenden Flanken und die Anzahl der steigenden Flanken in dem Signal TxD, vergleichen. Zusätzlich oder alternativ kann das Auswertemodul 153 jeweils die Zählwerte der Zähler 1521, 1522, also die Anzahl der fallenden Flanken und die Anzahl der steigenden Flanken in dem Signal Rx_In, vergleichen. Für jeden Vergleich kann ein Toleranzwert konfiguriert werden.

Dadurch kann noch weiter plausibilisiert werden, dass ein Sendekonflikt auf dem Bus 40 vorliegt. Dabei kann unterschieden werden zwischen dem Konfliktfall des Sendens eines Fehlerrahmens 47 (Error Flag) und dem Konfliktfall des Sendens aufgrund der nicht erkannten verlorenen Arbitration.

Als Folge davon kann in dem Empfangssignal RXD und/oder dem Signal S1 an die Kommunikationssteuereinrichtung 11 signalisiert werden, welcher Sendekonflikt aufgetreten ist. Soll auch das Empfangssignal Rx_In im Konfliktfall in der Datenphase 452 als Signal RxD weitergegeben werden, wird der mögliche Konflikt nur mit dem Signal S1 signalisiert, jedoch nicht über die RxD-Leitung signalisiert. Soll also Rx_In immer als RxD an die Kommunikationssteuereinrichtung 11 weitergegeben werden, ist eine zusätzliche Leitung erforderlich, um den Konflikt zu signalisieren.

Somit kann die Kommunikationssteuereinrichtung 11 nicht nur den Abbruch der Datenphase 452 vornehmen, sondern gegebenenfalls zusätzlich mit dem Senden eines Bitmusters den anderen Teilnehmerstationen 20, 30 das Ende der Datenphase 452 signalisieren und optional Angaben über die Art des Sendekonflikts mitteilen.

Alternativ oder zusätzlich kann das Auswertemodul 123 oder ein sonstiges Modul der Sende-/Empfangseinrichtung 12 ein separates Signal S1 erzeugen, das über eine separate Signalleitung an die Kommunikationssteuereinrichtung 11 gesendet wird und insbesondere mindestens einen Schaltimpuls oder ein vorbestimmtes Bitmuster zur Signalisierung des Konflikts hat. Weil in der Datenphase 452 der Sendekonflikt an die Kommunikationssteuereinrichtung 11 signalisiert wird, kann die im klassischen CAN herkömmliche Bitfehler-Prüfung durch den Vergleich von Sendesignal TXD mit Empfangssignal RXD ersetzt werden durch die Prüfung des Konfliktsignalisierungs-Signals. Das Konfliktsignalisierungs-Signal hat insbesondere ein vorbestimmtes Bitmuster, das den Sendekonflikt signalisiert. Insbesondere kann das Konfliktsignalisierungs-Signal eine '1' als "OK-Signal" und eine '0' als "Konflikt-Meldung" senden.

Alle zuvor beschriebenen Ausgestaltungen der Einrichtungen 15, 35, der Teilnehmerstationen 10, 20, 30, des Bussystems 1 und des darin ausgeführten Verfahrens können einzeln oder in allen möglichen Kombinationen Verwendung finden. Insbesondere können alle Merkmale der zuvor beschriebenen Ausführungsbeispiele und/oder deren Modifikationen beliebig kombiniert werden. Zusätzlich oder alternativ sind insbesondere folgende Modifikationen denkbar.

Die Einrichtung 15 kann unabhängig von den verschiedenen Kommunikationsphasen 451, 452, 453 oder nur in der Datenphase 452 eingeschaltet sein eingeschaltet sein. Im letzteren Fall muss die Einrichtung 15 jedoch einen entsprechenden Schaltimpuls zum Ein- oder Ausschalten empfangen. Dies ist beispielsweise über die zusätzliche Leitung realisierbar, über welche das Schaltsignal S1 gesendet wird, wie zuvor in Bezug auf das erste Ausführungsbeispiel beschrieben.

Die in den Figuren gezeigte Empfangsschwelle T_d basiert auf der Annahme, dass in dem Bussystem 1 die Buszustände U_D0, U_D1 invers zueinander mit betragsmäßig gleichen VDIFF-Pegeln getrieben werden. Alternativ ist es jedoch möglich, die Empfangsschwelle T_d in dem Fall entsprechend anzupassen, wenn die Buszustände U_D0 und U_D1 mit z.B. zwei unterschiedlichen positiven VDIFF-Pegeln getrieben werden.

Auch wenn die Erfindung zuvor am Beispiel des CAN-Bussystems beschrieben ist, kann die Erfindung bei jedem Kommunikationsnetzwerk und/oder Kommunikationsverfahren eingesetzt werden, bei welchem zwei verschiedene Kommunikationsphasen verwendet werden, in denen sich die Buszustände unterscheiden, die für die unterschiedlichen Kommunikationsphasen erzeugt werden. Insbesondere ist die Erfindung bei Entwicklungen von sonstigen seriellen Kommunikationsnetzwerken, wie Ethernet und/oder 100 Base-T1 Ethernet, Feldbussystemen, usw. einsetzbar.

Insbesondere kann das Bussystem 1 gemäß den Ausführungsbeispielen ein Kommunikationsnetzwerk sein, bei welchem Daten seriell mit zwei verschiedenen Bitraten übertragbar sind. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10, 20, 30 in dem Bussystem 1 der Ausführungsbeispiele ist beliebig. Insbesondere kann die Teilnehmerstation 20 in dem Bussystem 1 entfallen. Es ist möglich, dass eine oder mehrere der Teilnehmerstationen 10 oder 30 in dem Bussystem 1 vorhanden sind. Denkbar ist, dass alle Teilnehmerstationen in dem Bussystem 1 gleich ausgestaltet sind, also nur Teilnehmerstation 10 oder nur Teilnehmerstation 30 vorhanden sind.

Alle zuvor beschriebenen Varianten für die Erkennung des Sendekonflikts können zeitlicher Filterung unterliegen, um die Robustheit in Bezug auf elektromagnetische Verträglichkeit (EMV) und gegenüber elektrostatischer Aufladung (ESD), Pulsen und anderen Störungen zu erhöhen.

Zudem ist es möglich, die Bitzeitdauer t_bt2 in der Datenphase 452 im Vergleich zu der Bitzeitdauer t_bt1 in der Arbitrationsphase 451 und Rahmenendphase 453 zu verkürzen. In diesem Fall wird in der Datenphase 452 mit einer größeren Bitrate gesendet als in der Arbitrationsphase 451 und Rahmenendphase 453. Auf diese Weise lässt sich die Übertragungsgeschwindigkeit im Bussystem 1 noch weiter steigern.

## Patentansprüche

1. Einrichtung (12; 32) für ein serielles Bussystem (1), mit
einem Sendesignalanalysemodul (151) zum Zählen von Flanken eines Sendesignals (TxD), das auf einen Bus (40) des Bussystems (1) zu senden ist, um eine Nachricht (45), zwischen Teilnehmerstationen (10, 20, 30) des Bussystems (1) auszutauschen,
einem Sendemodul (121) zum Senden einer Nachricht (45) aufgrund des Sendesignals (TxD) auf den Bus (40),
einem Empfangssignalanalysemodul (152) zum Zählen von Flanken eines Empfangssignals (Rx_In), das aus einem auf dem Bus (40) aufgrund des Sendesignals (TxD) übertragenen Signal erzeugt wird, bei welchem sich für die Nachricht (45) die Buszustände (401, 402) des auf dem Bus (40) übertragenen Signals in einer ersten Kommunikationsphase (451; 453, 451) unterscheiden von Buszuständen (U_D0, U_D1) des in einer zweiten Kommunikationsphase (452) der Nachricht (45) auf dem Bus (40) übertragenen Signals, wobei das auf dem Bus (40) aufgrund des Sendesignals (TxD) übertragene Signal von einem Signal überlagert sein kann, das von einer anderen Teilnehmerstation (10, 20, 30) des Bussystems (1) auf den Bus (40) getrieben wurde, und
einem Auswertemodul (153) zum Auswerten der Differenz, die sich aus einem Vergleich der von dem Sendesignalanalysemodul (151) gezählten Flanken und der von dem Empfangssignalanalysemodul (152) gezählten Flanken ergibt,
wobei das Auswertemodul (153) für den Fall, in dem die Signallaufzeit auf dem Bus (40), welche das aus dem Sendesignal (TxD) erzeugte Signal (CAN_H, CAN_L) bis zu dem Empfang des Empfangssignals (Rx_In) an der Einrichtung (12; 32) hat, größer als die Bitzeit (t_b2) des Empfangssignals (Rx_In) ist, ausgestaltet ist zu signalisieren, ob der Betrag der Differenz kleiner als oder gleich einem vorbestimmten Wert ist, oder ob der Betrag der Differenz größer als der vorbestimmte Wert ist, und
wobei der vorbestimmte Wert größer als Null ist.

2. Einrichtung (12; 32) nach Anspruch 1,
wobei das Sendesignalanalysemodul (151) einen Zähler (1511) zum Zählen von fallenden Flanken des Sendesignals (TxD) aufweist, und
wobei das Empfangssignalanalysemodul (152) einen Zähler (1521) zum Zählen von fallenden Flanken des Empfangssignals (Rx_In) aufweist.

3. Einrichtung (12; 32) nach Anspruch 1 oder 2,
wobei das Sendesignalanalysemodul (151) einen ersten Zähler (1511) zum Zählen von fallenden Flanken des Sendesignals (TxD) und einen zweiten Zähler (1512) zum Zählen von steigenden Flanken des Sendesignals (TxD) aufweist, und
wobei das Empfangssignalanalysemodul (152) einen ersten Zähler (1521) zum Zählen von fallenden Flanken des Empfangssignals (Rx_In) und einen zweiten Zähler (1522) zum Zählen von steigenden Flanken des Empfangssignals (Rx_In) aufweist, und
wobei das Auswertemodul (153) zum Auswerten der Differenz, die sich aus einem Vergleich der von den ersten Zählern (1511, 1521) gezählten Flanken ergibt, und zum Auswerten der Differenz, die sich aus einem Vergleich der von den zweiten Zählern (1521, 1522) gezählten Flanken ergibt, ausgestaltet ist.

4. Einrichtung (12; 32) nach einem der vorangehenden Ansprüche, wobei das Auswertemodul (123) für den Fall, in dem die Signallaufzeit auf dem Bus (40) kleiner als oder gleich der Bitzeit (t_b2) des Empfangssignals (Rx_In) ist, ausgestaltet ist zu signalisieren, ob der Betrag der Differenz gleich Null ist, oder ob der Betrag der Differenz größer als Null ist.

5. Einrichtung (12; 32) nach einem der vorangehenden Ansprüche,
wobei das Auswertemodul (123) ausgestaltet ist, die Auswertung nach einem Inkrementieren des Zählwerts durch das Empfangssignalanalysemodul (152) auszuführen, und
wobei das Auswertemodul (123) ausgestaltet ist, die Signalisierung der Auswertung an dem Anschluss der Einrichtung (12; 32) auszugeben, an welchem das Empfangssignal (RxD) aus der Einrichtung (12; 32) auszugeben ist.

6. Einrichtung (12; 32) nach einem der vorangehenden Ansprüche,
wobei das Sendesignalanalysemodul (151) ausgestaltet ist, das Sendesignal (TxD) als Takt für das Zählen zu verwenden und Überschwingungen an den Flanken des Sendesignals (TxD) auszufiltern, und/oder
wobei das Empfangssignalanalysemodul (152) ausgestaltet ist, das Empfangssignal (Rx_In) als Takt für das Zählen zu verwenden und Überschwingungen an den Flanken des Empfangssignals (Rx_In) auszufiltern.

7. Einrichtung (12; 32) nach einem der vorangehenden Ansprüche, wobei die Buszustände (401, 402) des in der ersten Kommunikationsphase (451; 453, 451) von dem Bus (40) empfangenen Signals mit einem anderen Physical Layer erzeugt sind als die Buszustände (U_D0, U_D1) des in der zweiten Kommunikationsphase (452) empfangenen Signals.

8. Einrichtung (12; 32) nach einem der vorangehenden Ansprüche, wobei in der ersten Kommunikationsphase (451; 453, 451) ausgehandelt wird, welche der Teilnehmerstationen (10, 20, 30) des Bussystems (1) in der nachfolgenden zweiten Kommunikationsphase (452) einen zumindest zeitweise exklusiven, kollisionsfreien Zugriff auf den Bus (40) bekommt.

9. Einrichtung (12; 32) nach einem der vorangehenden Ansprüche, wobei das Sendemodul (121) beim Senden der verschiedenen Kommunikationsphasen (451 bis 453) einer Nachricht (45; 46) ausgestaltet ist, zwischen einer ersten Betriebsart und einer zweiten Betriebsart zu schalten.

10. Einrichtung (12; 16; 32) nach Anspruch 9,
wobei das Sendemodul (121) in der ersten Betriebsart ausgestaltet ist, einen ersten Datenzustand als Buszustand (402) mit unterschiedlichen Buspegeln für zwei Busadern (41, 42) der Busleitung (3) zu erzeugen und einen zweiten Datenzustand als Buszustand (401) mit demselben Buspegel für die zwei Busadern (41, 42) der Busleitung (3) zu erzeugen, und
wobei das Sendemodul (121) in der zweiten Betriebsart ausgestaltet ist, den ersten und zweiten Datenzustand jeweils als Buszustand (U_D0, U_D1) mit unterschiedlichen Buspegeln für die zwei Busadern (41, 42) der Busleitung (3) zu erzeugen.

11. Einrichtung (12; 16; 32) nach einem der vorangehenden Ansprüche,
zudem mit einem Empfangsmodul (122) zum Erzeugen des Empfangssignals (Rx_In) aus dem von dem Bus (40) empfangenen Signal,
wobei das Empfangsmodul (122) ausgestaltet ist, in der ersten Kommunikationsphase (451; 453, 451), eine Empfangsschwelle (T_a) zu verwenden, deren Spannungswert sich von einem Spannungswert einer Empfangsschwelle (Td) in der zweiten Kommunikationsphase (452) unterscheidet.

12. Teilnehmerstation (10; 30) für ein serielles Bussystem (1), mit
einer Kommunikationssteuereinrichtung (11; 31) zum Steuern einer Kommunikation der Teilnehmerstation (10; 30) mit mindestens einer anderen Teilnehmerstation (10; 20; 30) des Bussystems (1), und
einer Einrichtung (12; 32) nach einem der vorangehenden Ansprüche,
wobei die Einrichtung (12; 32) mit der Kommunikationssteuereinrichtung (11; 31) derart verbunden ist, dass die Signalisierung des Auswertemoduls (153) an die Kommunikationssteuereinrichtung (11; 31) ausgegeben wird.

13. Teilnehmerstation (10; 30) nach Anspruch 12,
wobei die Einrichtung (12; 32) ausgestaltet ist, der Kommunikationssteuereinrichtung (11; 31) mit dem Empfangssignal (RXD) und/oder mit einem Signal (S1) über eine separate Leitung die Auswertung des Auswertemoduls (153) zu signalisieren, um einen Sendekonflikt auf dem Bus (40) anzuzeigen, und
wobei die Kommunikationssteuereinrichtung (11; 31) ausgestaltet ist, das Sendesignal (TXD; TxD1) auf der Grundlage des Signals (RXD; S1) zu erzeugen oder abzubrechen und/oder anderen Teilnehmerstationen (20; 30) des Bussystems (1) den Sendekonflikt zu signalisieren.

14. Bussystem (1), mit
einem Bus (40), und
mindestens zwei Teilnehmerstationen (10; 20; 30), welche über den Bus (40) derart miteinander verbunden sind, dass sie seriell miteinander kommunizieren können und von denen mindestens eine Teilnehmerstation (10; 30) eine Teilnehmerstation (10; 30) nach Anspruch 12 oder 13 ist.

15. Verfahren zur Kommunikation in einem seriellen Bussystem (1), wobei das Verfahren die Schritte aufweist,
Zählen, mit einem Sendesignalanalysemodul (151), von Flanken eines Sendesignals (TxD), das auf einen Bus (40) des Bussystems (1) zu senden ist, um eine Nachricht (45), zwischen Teilnehmerstationen (10, 20, 30) des Bussystems (1) auszutauschen,
Senden, mit einem Sendemodul (121), einer Nachricht (45) aufgrund des Sendesignals (TxD) auf den Bus (40),
Zählen, mit einem Empfangssignalanalysemodul (152), von Flanken eines Empfangssignals (Rx_In), das aus einem auf dem Bus (40) aufgrund des Sendesignals (TxD) übertragenen Signal erzeugt wird, bei welchem sich für die Nachricht (45) die Buszustände (401, 402) des auf dem Bus (40) übertragenen Signals in einer ersten Kommunikationsphase (451; 453, 451) unterscheiden von Buszuständen (U_D0, U_D1) des in einer zweiten Kommunikationsphase (452) der Nachricht (45) auf dem Bus (40) übertragenen Signals, wobei das auf dem Bus (40) aufgrund des Sendesignals (TxD) übertragene Signal von einem Signal überlagert sein kann, das von einer anderen Teilnehmerstation (10, 20, 30) des Bussystems (1) auf den Bus (40) getrieben wurde, und
Auswerten, mit einem Auswertemodul (153), der Differenz, die sich aus einem Vergleich der von dem Sendesignalanalysemodul (151) gezählten Flanken und der von dem Empfangssignalanalysemodul (152) gezählten Flanken ergibt,
Signalisieren, mit dem Auswertemodul (153), für den Fall, in dem die Signallaufzeit auf dem Bus (40), welche das aus dem Sendesignal (TxD) erzeugte Signal (CAN_H, CAN_L) bis zu dem Empfang des Empfangssignals (Rx_In) an der Einrichtung (12; 32) hat, größer als die Bitzeit (t_b2) des Empfangssignals (Rx_In) ist, ob der Betrag der Differenz kleiner als oder gleich einem vorbestimmten Wert ist, oder ob der Betrag der Differenz größer als der vorbestimmte Wert ist, wobei der vorbestimmte Wert größer als Null ist.

## Claims

1. Device (12; 32) for a serial bus system (1), having a transmission signal analysis module (151) for counting edges of a transmission signal (TxD) that is to be sent to a bus (40) of the bus system (1) in order to exchange a message (45) between subscriber stations (10, 20, 30) of the bus system (1),
a transmission module (121) for sending a message (45) based on the transmission signal (TxD) to the bus (40), a received signal analysis module (152) for counting edges of a received signal (Rx_In) generated from a signal transmitted on the bus (40) based on the transmission signal (TxD), wherein the bus states (401, 402) of the signal transmitted on the bus (40) for the message (45) in a first communication phase (451; 453, 451) differ from bus states (U_D0, U_D1) of the signal transmitted on the bus (40) in a second communication phase (452) of the message (45), the signal transmitted on the bus (40) based on the transmission signal (TxD) being able to be overlapped by a signal that has been put onto the bus (40) by another subscriber station (10, 20, 30) of the bus system (1), and
an evaluation module (153) for evaluating the difference that arises from a comparison of the edges counted by the transmission signal analysis module (151) and the edges counted by the received signal analysis module (152), wherein if the signal propagation time on the bus (40) that the signal (CAN_H, CAN_L) generated from the transmission signal (TxD) has before the received signal (Rx_In) is received at the device (12; 32) is greater than the bit time (t_b2) of the received signal (Rx_In), the evaluation module (153) is configured to signal whether the absolute value of the difference is less than or equal to a predetermined value, or whether the absolute value of the difference is greater than the predetermined value, and
wherein the predetermined value is greater than zero.

2. Device (12; 32) according to Claim 1,
wherein the transmission signal analysis module (151) comprises a counter (1511) for counting falling edges of the transmission signal (TxD), and
wherein the received signal analysis module (152) comprises a counter (1521) for counting falling edges of the received signal (Rx_In).

3. Device (12; 32) according to Claim 1 or 2,
wherein the transmission signal analysis module (151) comprises a first counter (1511) for counting falling edges of the transmission signal (TxD) and a second counter (1512) for counting rising edges of the transmission signal (TxD), and
wherein the received signal analysis module (152) comprises a first counter (1521) for counting falling edges of the received signal (Rx_In) and a second counter (1522) for counting rising edges of the received signal (Rx_In), and
wherein the evaluation module (153) is configured to evaluate the difference that arises from a comparison of the edges counted by the first counters (1511, 1521) and to evaluate the difference that arises from a comparison of the edges counted by the second counters (1521, 1522).

4. Device (12; 32) according to one of the preceding claims, wherein if the signal propagation time on the bus (40) is less than or equal to the bit time (t_b2) of the received signal (Rx_In), the evaluation module (123) is configured to signal whether the absolute value of the difference is equal to zero or whether the absolute value of the difference is greater than zero.

5. Device (12; 32) according to one of the preceding claims,
wherein the evaluation module (123) is configured to perform the evaluation after the count has been incremented by the received signal analysis module (152), and
wherein the evaluation module (123) is configured to output the signalling of the evaluation at the connection of the device (12; 32) at which the received signal (RxD) is to be output from the device (12; 32).

6. Device (12; 32) according to one of the preceding claims,
wherein the transmission signal analysis module (151) is configured to use the transmission signal (TxD) as a pulse for the counting and to filter out overshoots on the edges of the transmission signal (TxD), and/or
wherein the received signal analysis module (152) is configured to use the received signal (Rx_In) as a pulse for the counting and to filter out overshoots on the edges of the received signal (Rx_In).

7. Device (12; 32) according to one of the preceding claims, wherein the bus states (401, 402) of the signal received from the bus (40) in the first communication phase (451; 453, 451) are generated with a different physical layer than the bus states (U_D0, U_D1) of the signal received in the second communication phase (452).

8. Device (12; 32) according to one of the preceding claims, wherein the first communication phase (451; 453, 451) comprises negotiating which of the subscriber stations (10, 20, 30) of the bus system (1) receives at least temporarily exclusive, collision-free access to the bus (40) in the subsequent, second communication phase (452).

9. Device (12; 32) according to one of the preceding claims, wherein the transmission module (121) is configured to switch between a first mode and a second mode when sending the different communication phases (451 to 453) of a message (45; 46).

10. Device (12; 16; 32) according to Claim 9,
wherein in the first mode the transmission module (121) is configured to generate a first data state as a bus state (402) having different bus levels for two bus wires (41, 42) of the bus line (3) and to generate a second data state as a bus state (401) having the same bus level for the two bus wires (41, 42) of the bus line (3), and wherein in the second mode the transmission module (121) is configured to generate the first and second data states as a respective bus state (U_D0, U_D1) having different bus levels for the two bus wires (41, 42) of the bus line (3).

11. Device (12; 16; 32) according to one of the preceding claims,
moreover having a reception module (122) for generating the received signal (Rx_In) from the signal received from the bus (40),
wherein the reception module (122) is configured to use in the first communication phase (451; 453, 451) a reception threshold (T_a) whose voltage value differs from a voltage value of a reception threshold (Td) in the second communication phase (452).

12. Subscriber station (10; 30) for a serial bus system (1), having
a communication control device (11; 31) for controlling communication between the subscriber station (10; 30) and at least one other subscriber station (10; 20; 30) of the bus system (1), and
a device (12; 32) according to one of the preceding claims,
wherein the device (12; 32) is connected to the communication control device (11; 31) such that the signalling of the evaluation module (153) is output to the communication control device (11; 31).

13. Subscriber station (10; 30) according to Claim 12, wherein the device (12; 32) is configured to signal the evaluation of the evaluation module (153) to the communication control device (11; 31) using the received signal (RXD) and/or using a signal (S1) via a separate line in order to indicate a transmission conflict on the bus (40), and
wherein the communication control device (11; 31) is configured to generate or terminate the transmission signal (TXD; TxD1) on the basis of the signal (RXD; S1) and/or to signal the transmission conflict to other subscriber stations (20; 30) of the bus system (1).

14. Bus system (1), having
a bus (40), and
at least two subscriber stations (10; 20; 30) connected to one another via the bus (40) in such a manner that they can communicate serially with one another and at least one subscriber station (10; 30) of which is a subscriber station (10; 30) according to Claim 12 or 13.

15. Method for communicating in a serial bus system (1), wherein the method has the steps of
counting, using a transmission signal analysis module (151), edges of a transmission signal (TxD) that is to be sent to a bus (40) of the bus system (1) in order to exchange a message (45) between subscriber stations (10, 20, 30) of the bus system (1),
sending, using a transmission module (121), a message (45) based on the transmission signal (TxD) to the bus (40),
counting, using a received signal analysis module (152), edges of a received signal (Rx_In) generated from a signal transmitted on the bus (40) based on the transmission signal (TxD), wherein the bus states (401, 402) of the signal transmitted on the bus (40) for the message (45) in a first communication phase (451; 453, 451) differ from bus states (U_D0, U_D1) of the signal transmitted on the bus (40) in a second communication phase (452) of the message (45), the signal transmitted on the bus (40) based on the transmission signal (TxD) being able to be overlapped by a signal that has been put onto the bus (40) by another subscriber station (10, 20, 30) of the bus system (1), and
evaluating, using an evaluation module (153), the difference that arises from a comparison of the edges counted by the transmission signal analysis module (151) and the edges counted by the received signal analysis module (152),
if the signal propagation time on the bus (40) that the signal (CAN_H, CAN_L) generated from the transmission signal (TxD) has before the received signal (Rx_In) is received at the device (12; 32) is greater than the bit time (t_b2) of the received signal (Rx_In), signalling, using the evaluation module (153), whether the absolute value of the difference is less than or equal to a predetermined value, or whether the absolute value of the difference is greater than the predetermined value, the predetermined value being greater than zero.

## Revendications

1. Dispositif (12 ; 32) pour un système de bus série (1), comprenant
un module d'analyse de signal d'émission (151) pour compter les flancs d'un signal d'émission (TxD) qui est à émettre sur un bus (40) du système de bus (1) afin d'échanger un message (45) entre des stations d'abonné (10, 20, 30) du système de bus (1),
un module d'émission (121) pour émettre sur le bus (40) un message (45) en raison du signal d'émission (TxD),
un module d'analyse de signal de réception (152) pour compter les flancs d'un signal de réception (RX_In) qui est généré à partir d'un signal transmis sur le bus (40) en raison du signal d'émission (TxD), dans lequel pour le message (45), les états de bus (401, 402) du signal transmis sur le bus (40) dans une première phase de communication (451 ; 453, 451) sont différents des états de bus (U_D0, U_D1) du signal transmis sur le bus (40) dans une deuxième phase de communication (452) du message (45), dans lequel le signal transmis sur le bus (40) en raison du signal d'émission (TxD) peut être superposé avec un signal qui a été envoyé sur le bus (40) par une autre station d'abonné (10, 20, 30) du système de bus (1), et
un module d'évaluation (153) pour évaluer la différence qui résulte d'une comparaison des flancs comptés par le module d'analyse de signal d'émission (151) et des flancs comptés par le module d'analyse de signal de réception (152),
dans lequel le module d'évaluation (153), dans le cas où le temps de propagation de signal sur le bus (40) que présente le signal (CAN_H, CAN_L) généré à partir du signal d'émission (TxD) jusqu'à la réception du signal de réception (Rx_In) au niveau du dispositif (12 ; 32) est supérieur au temps de bit (t_b2) du signal de réception (Rx_In), est configuré pour signaler si le montant de la différence est inférieur ou égal à une valeur prédéterminée ou si le montant de la différence est supérieur à la valeur prédéterminée, et
dans lequel la valeur prédéterminée est supérieure à zéro.

2. Dispositif (12 ; 32) selon la revendication 1,
dans lequel le module d'analyse de signal d'émission (151) présente un compteur (1511) pour compter les flancs descendants du signal d'émission (TxD), et
dans lequel le module d'analyse de signal de réception (152) présente un compteur (1521) pour compter les flancs descendants du signal de réception (Rx_In).

3. Dispositif (12 ; 32) selon la revendication 1 ou 2,
dans lequel le module d'analyse de signal d'émission (151) présente un premier compteur (1511) pour compter les flancs descendants du signal d'émission (TxD) et un deuxième compteur (1512) pour compter les flancs montants du signal d'émission (TxD), et
dans lequel le module d'analyse de signal d'émission (152) présente un premier compteur (1521) pour compter les flancs descendants du signal de réception (Rx_In) et un deuxième compteur (1522) pour compter les flancs montants du signal de réception (Rx_In), et
dans lequel le module d'évaluation (153) est configuré pour évaluer la différence qui résulte d'une comparaison des flancs comptés par les premiers compteurs (1511, 1521) et pour évaluer la différence qui résulte d'une comparaison des flancs comptés par les deuxièmes compteurs (1521, 1522).

4. Dispositif (12 ; 32) selon l'une quelconque des revendications précédentes, dans lequel, dans le cas où le temps de propagation de signal sur le bus (40) est inférieur ou égal au temps de bit (t_b2) du signal de réception (Rx_In), le module d'évaluation (123) est configuré pour signaler si le montant de la différence est égal à zéro ou si le montant de la différence est supérieur à zéro.

5. Dispositif (12 ; 32) selon l'une quelconque des revendications précédentes,
dans lequel le module d'évaluation (123) est configuré pour effectuer l'évaluation après une incrémentation de la valeur de comptage par le module d'analyse de signal de réception (152), et
dans lequel le module d'évaluation (123) est configuré pour sortir la signalisation de l'évaluation au port du dispositif (12 ; 32) où le signal de réception (RxD) est à sortir du dispositif (12 ; 32).

6. Dispositif (12 ; 32) selon l'une quelconque des revendications précédentes,
dans lequel le module d'analyse de signal d'émission (151) est configuré pour utiliser le signal d'émission (TxD) comme horloge pour le comptage et pour éliminer par filtrage des suroscillations au niveau des flancs du signal d'émission (TxD), et/ou
dans lequel le module d'analyse de signal de réception (152) est configuré pour utiliser le signal de réception (Rx_In) comme horloge pour le comptage et pour éliminer par filtrage des suroscillations au niveau des flancs du signal de réception (Rx_In).

7. Dispositif (12 ; 32) selon l'une quelconque des revendications précédentes, dans lequel les états de bus (401, 402) du signal reçu du bus (40) dans la première phase de communication (451 ; 453, 451) sont générés par une autre couche physique sous forme d'états de bus (U_DO, U_D1) du signal reçu dans la deuxième phase de communication (452).

8. Dispositif (12 ; 32) selon l'une quelconque des revendications précédentes, dans lequel dans la première phase de communication (451 ; 453, 451), on négocie laquelle des stations d'abonné (10, 20, 30) du système de bus (1) obtiendra dans la deuxième phase de communication (452) consécutive un accès au bus (40) au moins temporairement exclusif, sans collision.

9. Dispositif (12 ; 32) selon l'une quelconque des revendications précédentes, dans lequel, lors de l'émission des différentes phases de communication (451 à 453) d'un message (45 ; 46), le module d'émission (121) est configuré pour commuter entre un premier mode de fonctionnement et un deuxième mode de fonctionnement.

10. Dispositif (12 ; 16 ; 32) selon la revendication 9, dans lequel, dans le premier mode de fonctionnement, le module d'émission (121) est configuré pour générer un premier état de données comme état de bus (402) avec différents niveaux de bus pour deux fils de bus (41, 42) de la ligne de bus (3), et pour générer un deuxième état de données comme état de bus (401) avec le même niveau de bus pour les deux fils de bus (41, 42) de la ligne de bus (3), et
dans lequel, dans le deuxième mode de fonctionnement, le module d'émission (121) est configuré pour générer le premier et le deuxième état de données respectivement comme état de bus (U_D0, U_D1) avec différents niveaux de bus pour les deux fils de bus (41, 42) de la ligne de bus (3).

11. Dispositif (12 ; 16 ; 32) selon l'une quelconque des revendications précédentes,
comprenant en outre un module de réception (122) pour générer le signal de réception (Rx_In) à partir du signal reçu du bus (40),
dans lequel le module de réception (122) est configuré pour utiliser dans la première phase de communication (451 ; 453, 451) un seuil de réception (T_a) dont la valeur de tension est différente d'une valeur de tension d'un seuil de réception (Td) dans la deuxième phase de communication (452).

12. Station d'abonné (10 ; 30) pour un système de bus série (1), comprenant
un dispositif de commande de communication (11 ; 31) pour commander une communication de la station d'abonné (10 ; 30) avec au moins une autre station d'abonné (10 ; 20 ; 30) du système de bus (1), et
un dispositif (12 ; 32) selon l'une quelconque des revendications précédentes,
dans laquelle le dispositif (12 ; 32) est relié au dispositif de commande de communication (11 ; 31) de telle sorte que la signalisation du module d'évaluation (153) est sortie au dispositif de commande de communication (11 ; 31).

13. Station d'abonné (10 ; 30) selon la revendication 12,
dans laquelle le dispositif (12 ; 32) est configuré pour signaler au dispositif de commande de communication (11 ; 31), par le signal de réception (RXD) et/ou par un signal (S1) sur une ligne séparée, l'évaluation du module d'évaluation (153) afin d'indiquer un conflit d'émission sur le bus (40), et
dans laquelle le dispositif de commande de communication (11 ; 31) est configuré pour générer ou abandonner le signal d'émission (TXD ; TxD1) sur la base du signal (RXD ; S1) et/ou pour signaler le conflit d'émission à d'autres stations d'abonné (20 ; 30) du système de bus (1) .

14. Système de bus (1), comprenant
un bus (40), et
au moins deux stations d'abonné (10 ; 20 ; 30) qui sont reliées l'une à l'autre par le biais du bus (40), de telle sorte qu'elles peuvent communiquer en série entre elles, et parmi lesquelles au moins une station d'abonné (10 ; 30) est une station d'abonné (10 ; 30) selon la revendication 12 ou 13.

15. Procédé permettant de communiquer dans un système de bus série (1), le procédé présentant les étapes consistant à
compter, à l'aide d'un module d'analyse de signal d'émission (151), les flancs d'un signal d'émission (TxD) qui est à émettre sur un bus (40) du système de bus (1) afin d'échanger un message (45) entre des stations d'abonné (10, 20, 30) du système de bus (1), émettre, à l'aide d'un module d'émission (121), un message (45) en raison du signal d'émission (TxD) sur le bus (40),
compter, à l'aide d'un module d'analyse de signal de réception (152), les flancs d'un signal de réception (RX_In) qui est généré à partir d'un signal transmis sur le bus (40) en raison du signal d'émission (TxD), dans lequel pour le message (45), les états de bus (401, 402) du signal transmis sur le bus (40) dans une première phase de communication (451 ; 453, 451) sont différents des états de bus (U_D0, U_D1) du signal transmis sur le bus (40) dans une deuxième phase de communication (452) du message (45), dans lequel le signal transmis sur le bus (40) en raison du signal d'émission (TxD) peut être superposé avec un signal qui a été envoyé sur le bus (40) par une autre station d'abonné (10, 20, 30) du système de bus (1), et
évaluer, à l'aide d'un module d'évaluation (153), la différence qui résulte d'une comparaison des flancs comptés par le module d'analyse de signal d'émission (151) et des flancs comptés par le module d'analyse de signal de réception (152),
signaler, à l'aide du module d'évaluation (153), dans le cas où le temps de propagation de signal sur le bus (40) que présente le signal (CAN_H, CAN_L) généré à partir du signal d'émission (TxD) jusqu'à la réception du signal de réception (Rx_In) au niveau du dispositif (12 ; 32) est supérieur au temps de bit (t_b2) du signal de réception (Rx_In), si le montant de la différence est inférieur ou égal à une valeur prédéterminée ou si le montant de la différence est supérieur à la valeur prédéterminée, la valeur prédéterminée étant supérieure à zéro.
